# EUROPÄISCHE PATENTANMELDUNG

(11) **EP 4 358 368 A1**
(43) Veröffentlichungstag der Anmeldung: **24.04.2024**
(21) Anmeldenummer: 22201967.1
(22) Anmeldetag: 17.10.2022
(51) Int. Cl.: H02K 1/18, H02K 3/32, H02K 3/52, H02K 1/14

(54) **NEUARTIGE STATORKONFIGURATION**

(71) Anmelder: Miba eMobility GmbH, 4663 Laakirchen (AT)
(72) Erfinder: ANDESSNER, Dietmar, 4625 Offenhausen (AT); STETINA, Gerold, 4840 Vöcklabruck (AT); ZWIRZITZ, Reinhard, 4655 Vorchdorf (AT)
(74) Vertreter: Burger, Hannes

(57) **Zusammenfassung**

Die Erfindung betrifft einen Stator 2 einer Axialflussmaschine mit einem Statorjoch 11, mehreren mit dem Statorjoch 11 verbundenen Statorzähnen 7 und an den Statorzähnen 7 angeordneten Flusssammelelementen 6 sowie einer oder mehreren Spulenwicklungen 10, die jeweils um die Statorzähne 7 angeordnet sind, sowie zumindest einer Trägereinheit zur Positionierung der Spulenwicklung an dem jeweiligen Statorzahn 7 der Axialflussmaschine, wobei die Trägereinheit eine Spulenwandung aufweist, die einerseits in ihrem Inneren den Statorzahn 7 aufnimmt und auf der andererseits die Spulenwicklung gewickelt ist, wodurch der Statorzahn 7 bei montierter Trägereinheit durch die Spulenwicklung zumindest teilweise umfangen ist, und die Trägereinheit zumindest teilweise aus Kunststoff gefertigt ist und einen geeigneten ersten Halte- und Positioniermechanismus aufweist, über welchen die Trägereinheit an dem Statorjoch und/oder Statorzahn 7 positioniert und befestigt ist. Die Trägereinheit weist eine Aufnahme zur Befestigung des Flusssammelelementes 6, insbesondere eines Flusssammelplättchens, an der Trägereinheit auf, so dass bei an der Trägereinheit befestigtem Flusssammelelement 6, das Flusssammelelement 6 über die Trägereinheit mit dem Statorjoch 11 und/oder Statorzahn 7 verbunden ist.

## Beschreibung

Die Erfindung betrifft einen Stator einer Axialflussmaschine mit einem Statorjoch, mehreren mit dem Statorjoch verbundenen Statorzähnen und an den Statorzähnen angeordneten Flusssammelelementen sowie einer oder mehreren Spulenwicklungen, die jeweils um die Statorzähne angeordnet sind, sowie zumindest einer Trägereinheit zur Positionierung der Spulenwicklung an dem jeweiligen Statorzahn der Axialflussmaschine, wobei die Trägereinheit eine Spulenwandung aufweist, die einerseits in ihrem Inneren den Statorzahn aufnimmt und auf der andererseits die Spulenwicklung gewickelt ist, wodurch der Statorzahn bei montierter Trägereinheit durch die Spulenwicklung zumindest teilweise umfangen ist, und die Trägereinheit zumindest teilweise aus Kunststoff gefertigt ist und einen geeigneten ersten Halte- und Positioniermechanismus aufweist, über welchen die Trägereinheit an dem Statorjoch und/oder Statorzahn positioniert und befestigt ist.

Aus dem Stand der Technik sind verschiedene Ansätze zur Konfiguration eines Stators einer Axialflussmaschine bekannt.

Beispielsweise ist aus AT520876B1 eine Statorkonfiguration bekannt, bei welcher das Flussammlerplättchen durch eine Klammer am Stator gehalten wird.

Zudem ist beispielsweise aus US20213069467A1 bekannt, die elektrische Wicklung am Statorzahn über einen Spulenkörper zu stützen.

Alle diese Konfigurationen weisen Nachteile im Bereich der Komplexität und Haltbarkeit auf. Der Zusammenbau der Statoren soll möglich einfach sein und gleichzeitig sollen die verwendete Konfiguration den Herausforderungen im Betrieb hinsichtlich insbesondere mechanischer Festigkeit und elektrischer Isolation standhalten.

Es ist deshalb eine technische Aufgabe der vorliegenden Erfindung einen Stator entsprechend dem Oberbegriff des Anspruchs 1 zu entwickeln, der diese technischen Probleme löst.

Erfindungsgemäß wird diese Aufgabe durch einen Stator entsprechend Anspruch 1 gelöst.

Dadurch, dass nach einer besonderen Ausführungsform die Trägereinheit eine Aufnahme zur Befestigung des Flusssammelelementes, insbesondere eines Flusssammelplättchens, an der Trägereinheit aufweist, so dass bei an der Trägereinheit befestigtem Flussammelelement, das Flusssammelelement über die Trägereinheit mit dem Statorjoch und/oder Statorzahn verbunden bzw. befestigt ist, ist eine besonders effiziente Form der Herstellung eines Stators möglich. Die erfindungsgemäße Trägereinheit weist damit mehrere Funktionen auf.

Hiermit kann eine multifunktionale Trägereinheit verwirklicht werden, dass den Zusammenbau eines Stators einer Axialflussmaschine wesentlich vereinfacht.

Nach einer Ausführungsform des erfindungsgemäßen Stators weist die Trägereinheit einen Verriegelungsmechanismus zur Befestigung des Flusssammelelementes an der Trägereinheit auf, der einerseits ermöglicht, dass bei unbewickelter Trägereinheit und geöffnetem Verriegelungsmechanismus das Flusssammelelement an der Trägereinheit angeordnet werden kann, insbesondere in die Trägereinheit einlegbar und/oder einschiebbar ist, und andererseits durch das Aufwickeln der Spulenwicklung an der Spulenwandung der Trägereinheit der Verriegelungsmechanismus geschlossen wird, so dass das Flusssammelelement verliersicher, insbesondere formschlüssig, an der Trägereinheit befestigt ist.

Nach einer Ausführungsform des erfindungsgemäßen Stators ist der erster Halte- und Positioniermechanismus so ausgestaltet, dass die Trägereinheit über eine formschlüssige Verbindung am Statorjoch befestigt ist.

Nach einer Ausführungsform des erfindungsgemäßen Stators weist der erste Halte- und Positioniermechanismus ein Spannelement, insbesondere eine metallische Federklammer, zur Fixierung der Trägereinheit am Stator auf, wobei das Spannelement zumindest teilweise an der den Statorzähnen abgewandten Seite des Statorjochs angeordnet ist.

Nach einer Ausführungsform des erfindungsgemäßen Stators ist das Spannelement an zumindest zwei unterschiedlichen Ankerpunkten mit der Trägereinheit verbunden, wobei ein erster Ankerpunkt im Bereich des äußeren Durchmessers des Statorsjoches abgeordnet ist und ein zweiter Ankerpunkt im Bereich des inneren Durchmessers des Statorjoches angeordnet ist.

Nach einer Ausführungsform des erfindungsgemäßen Stators spannt das Spannelement die Trägereinheit in Richtung des Statorjochs. Damit drückt das Flusssammelelement gegen das, dem Statorjoch abgewandten, Ende des Statorzahns und stellt zwischen dem Statorzahn und dem Flusssammelelement eine Pressung her.

Nach einer Ausführungsform des erfindungsgemäßen Stators weist die Trägereinheit, in Richtung der durch das Spannelement ausgeübten Vorspannung der Trägereinheit gegen das Statorjoch, zum Statorjoch hin eine Freistellung auf, so dass das Flusssammelelement durch das Spannelement über die Trägereinheit auf Kontakt gegen den Statorzahn gepresst werden kann.

Nach einer Ausführungsform des erfindungsgemäßen Stators weist das Flusssammelelement zumindest teilweise SMC-Material auf.

Nach einer Ausführungsform des erfindungsgemäßen Stators besteht die Trägereinheit zumindest teilweise aus faserverstärktem Kunststoff.

Nach einer Ausführungsform des erfindungsgemäßen Stators besteht die Trägereinheit zumindest teilweise aus einem Kunststoff, der beispielsweise in einem Spritzgussverfahren und/oder durch additive, insbesondere laser-additive, Verfahren gebildet wird.

Nach einer Ausführungsform des erfindungsgemäßen Stators ist das Trägerbauteil über eine formschlüssige Verbindung mit dem Statorjoch verbunden.

Nach einer Ausführungsform des erfindungsgemäßen Stators weist die Trägereinheit integrierte Kontaktterminals zur Kontaktierung der Spulenwicklungen auf.

Nach einer Ausführungsform des erfindungsgemäßen Stators weist die Trägereinheit integrierte Verschaltungsterminale zur Verschaltung der Spulenwicklungen auf.

Nach einer besonderen Ausführungsform ist das Trägerbauteil mehrteilig ausgeführt. Beispielsweise kann die Struktur der Spulenwandung als separater Baukörper ausgeführt werden.

Die Erfindung ist nachfolgend in beispielhaften, verschiedenen Ausführungsformen anhand von schematischen, nicht-einschränkenden Zeichnungen gezeigt. Es zeigen:
Fig. 1 eine schematische Ansicht einer möglichen Ausführungsform eines Stators einer Axialflussmaschine
Fig. 2 eine schematische Ansicht einer möglichen Ausführungsform eines Stators einer Axialflussmaschine in einer zweiten möglichen Konfiguration
Fig. 3 eine schematische Ansicht einer möglichen Ausführungsform eines Stators einer Axialflussmaschine in einer dritten möglichen Konfiguration
Fig. 4 eine schematische Ansicht einer möglichen Ausführungsform eines erfindungsmäßen Stators einer Axialflussmaschine in einer vierten möglichen Konfiguration Fig. 5 eine weitere schematische Ansicht der Ausführungsform nach Fig. 4
Fig. 6 eine Detailansicht der Ausführungsform nach Fig. 4
Fig. 7 eine weitere Detailansicht der Ausführungsform nach Fig. 4

Die Offenbarung der Veröffentlichungen WO2021003510A2 und AT520876B1 der Anmelderin werden hiermit vollumfänglich in die Offenbarung der vorliegenden Anmeldung aufgenommen.

Einführend sei festgehalten, dass in den unterschiedlich beschriebenen Ausführungsformen gleiche Teile zumindest teilweise mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen. Diese Lageangaben sind bei einer Lageänderung sinngemäß auf die neue Lage zu übertragen.

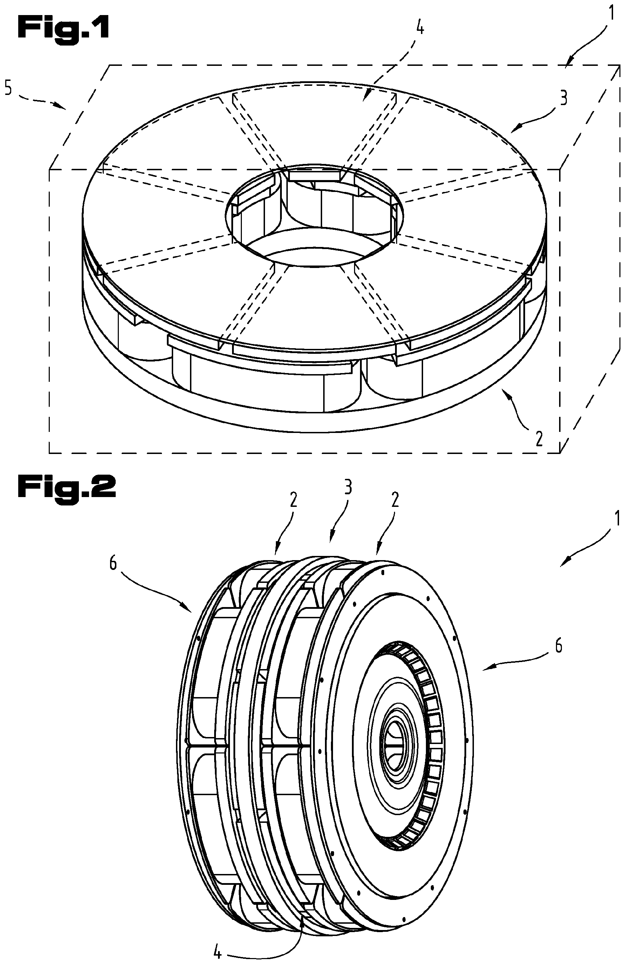

Fig. 1 zeigt eine erste Ausführungsvariante einer Axialflussmaschine 1 umfassend, zumindest einen Stator 2 und zumindest einen Rotor 3. Nach anderen möglichen Ausführungsformen (nicht dargestellt) sind Anordnungen mit mehreren Rotoren möglich, zwischen denen beispielsweise jeweils ein Stator angeordnet ist.

Auf dem Rotor 3 bzw. den Rotoren 3 sind Magnete 4, beispielsweise Permanentmagnete, angeordnet. Der zumindest eine Stator 2 und der zumindest eine Rotor 3 können in einem fakultativ vorhandenen Motorengehäuse 5 angeordnet sein, wie dies in Fig. 1 strichliert angedeutet ist.

Es können auch mehrere Statoren 2 angeordnet sein. In diesem Fall sind vorzugsweise alle Statoren 2 gleich ausgebildet, sodass die folgenden Ausführungen auch auf die gegebenenfalls weiter vorhandenen Statoren 2 angewandt werden können. Beispielsweise zeigt die Fig. 2 eine Ausführungsvariante der Axialflussmaschine 1, bei der nur ein Rotor 3 angeordnet ist. Der Rotor 3 ist - in der Axialrichtung betrachtet - zwischen zwei Statoren 2 angeordnet, die entsprechend der Erfindung ausgebildet sind. Der Rotor 3 ist beidseitig mit mehreren Magneten 4 (Permanentmagnete) bestückt. Die beiden Statoren 2 sind so angeordnet, dass Rückschlusselemente bzw. ein Statorjoch jeweils auf der vom Rotor 3 abgewandten Seite des Stators 2 angeordnet sind.

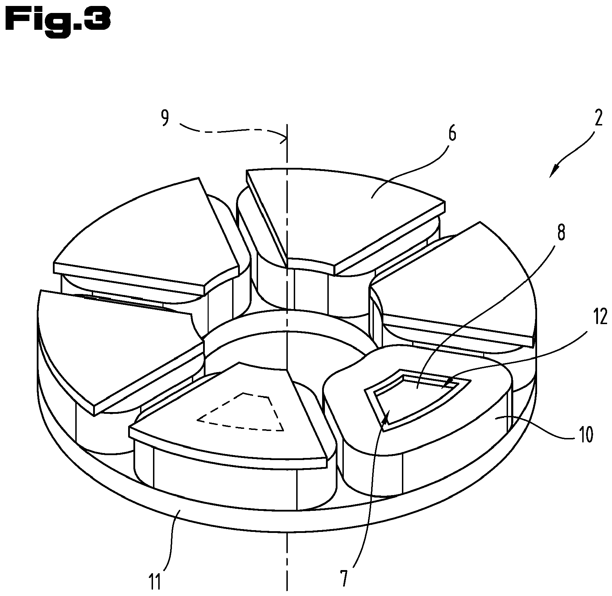

Fig. 3 zeigt eine weitere mögliche Ausführungsvariante eines Stators 2 für eine Axialflussmaschine 1. Der Stator 2 weist mehrere Statorzähne 7 auf. Die Statorzähne 7 weisen jeweils einen Zahnkörper 8 auf. Weiter weisen die Statorzähne 7 in einer Axialrichtung 9 gegenüberliegende Endabschnitte auf, die einen Zahnkopf und einen Zahnfuß bilden. Die Statorzähne 7 sind jeweils mit einer Spulenwicklung 10 (in Fig. 3 nur schematisch angedeutet) umwickelt. Die Zahnkörper 8 liegen in der Axialrichtung 9 an einem, insbesondere plattenförmigen, Rückschlusselement 11 auf oder sind zumindest teilweise in das Rückschlusselement 11 eingesteckt, wozu das Rückschlusselement entsprechende Ausnehmungen aufweist, in denen die Zahnkörper 8 bevorzugt formschlüssig aufgenommen sind. Das Rückschlusselement 11 ist vorzugsweise einstückig ausgebildet. Nach einer weiteren Ausführungsform ist das Rückschlusselement 11 vorzugsweise einstückig mit den Statorzähnen 7 ausgebildet. Nach einer weiteren möglichen Ausführungsform ist das Rückschlusselement 11 aus einem Elektroblech gewickelt.

Zumindest zwischen der Spulenwicklung 10 und dem Zahnkörper 8 ist nach einer möglichen Ausführungsform eine nicht weiter dargestellte elektrische Isolierung angeordnet. Die Anzahl der in den Figuren dargestellten Statorzähne 7 ist nicht einschränkend zu verstehen. Vielmehr richtet sich deren Anzahl nach den jeweiligen Gegebenheiten in der Verwendung des Stators 2 bzw. der Axialflussmaschine 1 nach den gewünschten Leistungsmerkmalen der Anwendung.

Die Statorzähne 7 sind gleichmäßig verteilt über den Umfang des Stators 2 angeordnet. Insbesondere weisen in Richtung der Axialrichtung 9 betrachtet eine zumindest annähernd trapezförmigen Querschnittsfläche auf.

In Fig. 3 sind Flusssammelelemente 6 gezeigt bzw. an einer Stelle entfernt worden, um eine bessere Sicht auf die Statorzähne 7 zu ermöglichen.

Das, insbesondere ringförmige, Rückschlusselement 11 des Stators 2 kann aus einem hierfür üblichen Werkstoff bestehen. Nach einer besonderen Ausführungsform können die Statorzähne mit dem Rückschlusselement 11, der vom Fachmann auch als Statorjoch bezeichnet wird, einteilig bzw. einstückig ausgeführt sein.

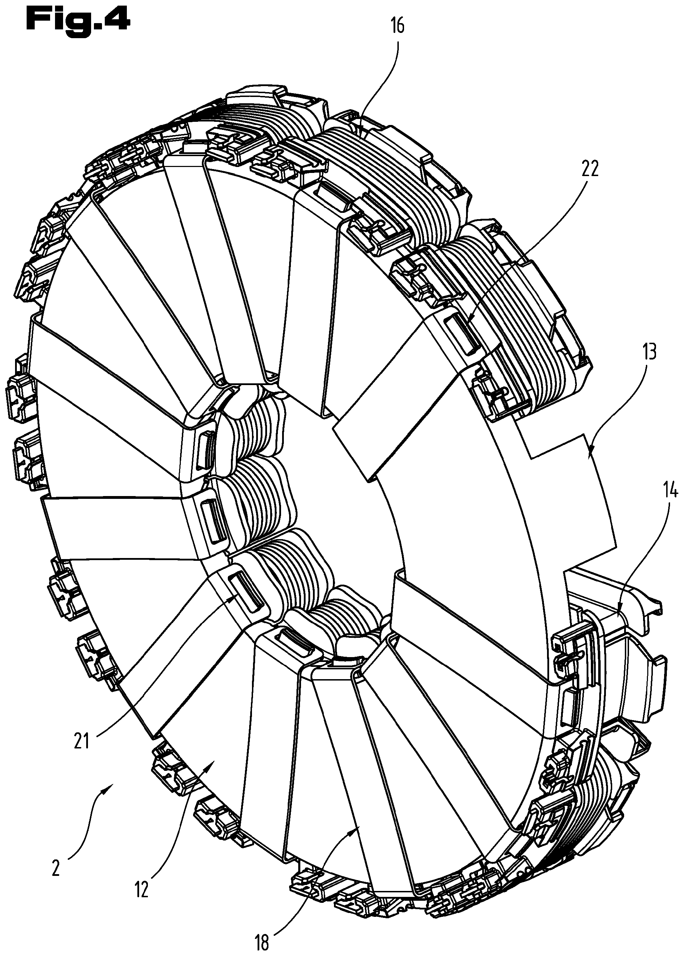

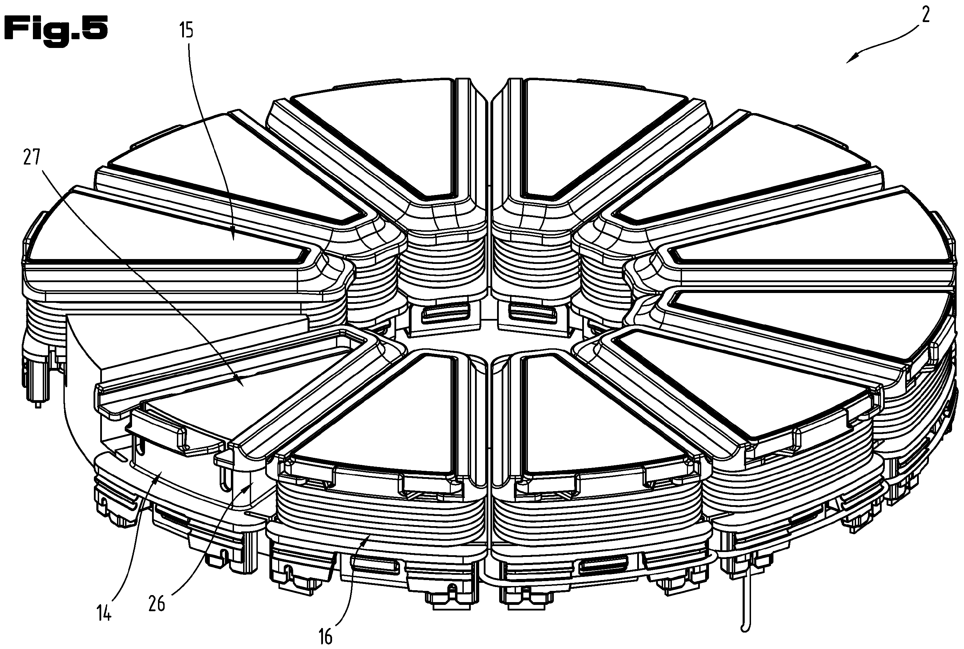

In Fig. 4 ist eine weitere Ausführungsform eines Stators 2 einer Axialflussmaschine gezeigt. Dabei weist der Stator 2 ein Statorjoch 12 mit Statorzähnen 13 auf. Darüber hinaus ist eine Trägereinheit 14 vorgesehen, das einen ersten Halte- und Positioniermechanismus aufweist über welchen einerseits die Position der Trägereinheit 14 relativ zum Statorjoch und/oder Statorzahn definiert wird und ferner die Position der Flusssammelelemente 15, die von den der Trägereinheit 14 getragen werden, relativ zum Statorjoch und/oder Statorzahn definiert wird. Ferner ist die Trägereinheit 14 in der gezeigten möglichen Ausführungsform als Träger der Spulenwickungen 16 in Verwendung. Dazu weist die Trägereinheit 14 geeignete Spulenwandungen 26 auf an denen die Drähte der Spule gewickelt werden und in der Folge die Spulenwicklungen 16 bilden. Das ist schematisch in Fig. 5 gezeigt, wo der besseren Anschaulichkeit halber ein Statorzahn 27 und eine Spulenwandung 26 ohne Spulenwicklung gezeigt ist. Die Trägereinheit 14 kann weitere Funktionen am Stator, beispielsweise zur Kontaktierung der Wicklungen und/oder zur Durchführung und/oder Verschaltung der verwendeten elektrischen Leiter, insbesondere der Wicklungen übernehmen. Die Trägereinheit 14 ist aus Kunststoff und/oder aus faserverstärktem Kunststoff, beispielsweise in einem Spritzgussverfahren, hergestellt.

In den Fig. 4 bis 7 sind Teile der Trägereinheit ausgeblendet, damit die Merkmale der Ausführung besser ersichtlich sind. Beispielsweise ist in Fig. 4 ein Teil der Trägereinheit 14 ausgeblendet um eine Sicht auf den Statorzahn 13 zu ermöglichen. Nach einer besonderen Ausführungsform der Erfindung kann die Trägereinheit 14 auch aus Modulen zusammengesetzt werden, sodass beispielsweise pro Statorzahn eine Modul der Trägereinheit vorgesehen ist. Nach einer besonderen Ausführungsform der Erfindung werden die einzelnen Module dann zur Gesamtträgereinheit 14 zusammengesetzt.

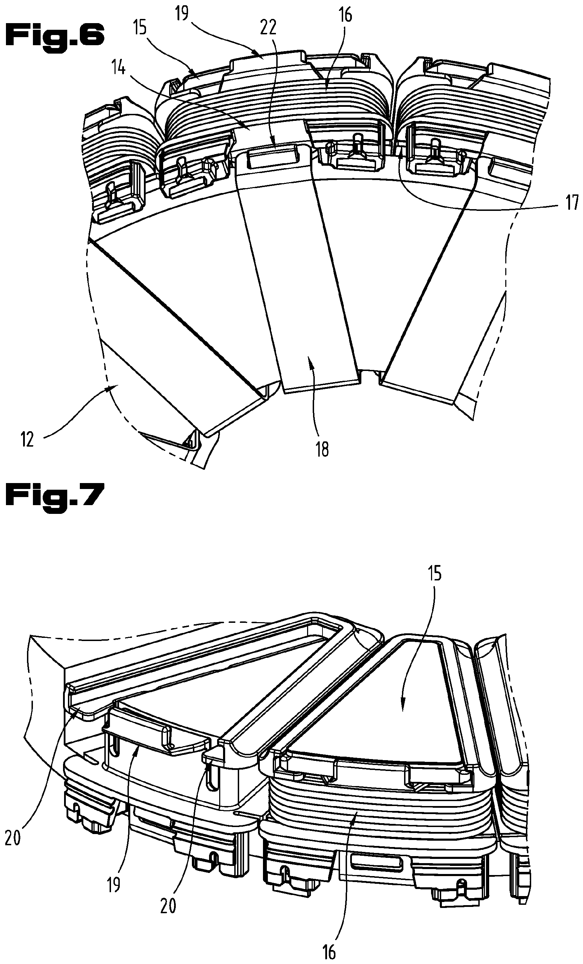

Wie in Fig. 4 bis Fig. 7 ersichtlich, werden die Flusssammelelemente 15 in der Trägereinheit 14 durch einen Verriegelungsmechanismus verliersicher, beispielsweise formschlüssig, befestigt. Andere Befestigungen sind allerdings ebenfalls möglich. In der dargestellten Ausführungsform weist der Verriegelungsmechanismus eine Montagenase 19 sowie mehrere Montagetaschen 20 auf. Nach einer bevorzugten Ausführungsform kann das Flusssammelelement 15, nach einem Nach-unten-drücken der äußeren an der Trägereinheit 14 vorkragenden Montagenase 19 an der Trägereinheit 14 radial nach innen in die Montagetaschen 20 der Trägereinheit 14 eingeschoben werden. Die Montagenase 19 federt dabei durch das Nach-unten-drücken nach unten und/oder nach außen und gibt damit den Raum zum Einschieben des Flusssammelelementes 15 in die Montagetaschen 20 frei. Sobald das Flusssammelelement 15 in den Montagetaschen 20 positioniert ist, lässt man die Montagenase 19 zurückfedern, sodass die Montagenase 19 in ihrer rückgefederten Normalposition, wie in Fig. 7 dargestellt, das Flusssammelelement 15 radial außen fixiert.

Am Statorjoch 12 sind eine Reihe von Spannelementen 18 vorgesehen, die zur Fixierung der Trägereinheit 14 am Statorjoch 12 dient. Die Trägereinheit 14 weist dazu zumindest zwei Ankerelemente 21, 22 auf, beispielsweise als Haltenasen ausgeführt, an denen das Spannelement 18 befestigt wird. Im einfachsten Fall sind das entsprechende Haltenasen, die an der Trägereinheit 14 vorgesehen sind und in entsprechende Ausnehmungen in den Spannelementen 18 eingreifen. Das Spannelement 18 spannt nach einer besonderen Ausführungsform über diese Ankerelemente 21, 22 die Trägereinheit 14 gegen das Statorjoch 12, sodass das Flusssammelelement 15 gegen das, dem Statorjoch 12 abgewandten Ende 18 des Statorzahnes 13 drückt. Hierdurch wird der Statorzahn 13 gegen das Flusssammelelement 15 gepresst und vice versa. Wie in den Figuren dargestellt, ist zwischen der Trägereinheit 14 und dem Statorjoch 12 in axialer Richtung eine Freistellung 17 vorgesehen. Durch diese Freistellung ist die Herstellung der Pressung zwischen Flusssammelelement 15 und Statorzahn 13 möglich. Hierdurch ist es möglich über das Spannelement 18 das Flusssammelelement 15 gegen den Statorzahn zu spannen, so dass eine, insbesondere kraftschlüssige, Verbindung zwischen dem Statorzahn 13 und dem Flusssammelelement 15 hergestellt wird. Nach einer besonderen Ausführungsform der Erfindung wird durch Bewicklung der Trägereinheit 14 mit der Spulenwicklung der Aufnahmemechanismus zur Aufnahme des Flusssammelementes 15 geeignet arretiert. Dabei fixiert die Spulenwicklung 16 die Position der Montagenase 19 in radialer und/oder axialer Richtung, sodass diese nicht oder zumindest kaum, wie beim Einbau des Flussammelelementes 15 elastisch nach unten und/oder nach außenfedern kann.

## Patentansprüche

1. Stator einer Axialflussmaschine mit einem Statorjoch, mehreren mit dem Statorjoch verbundenen Statorzähnen und an den Statorzähnen angeordneten Flusssammelelementen sowie einer oder mehreren Spulenwicklungen, die jeweils um die Statorzähne angeordnet sind, sowie zumindest einer Trägereinheit zur Positionierung der Spulenwicklung an dem jeweiligen Statorzahn der Axialflussmaschine, wobei die Trägereinheit eine Spulenwandung aufweist, die einerseits in ihrem Inneren den Statorzahn aufnimmt und auf der andererseits die Spulenwicklung gewickelt ist, wodurch der Statorzahn bei montierter Trägereinheit durch die Spulenwicklung zumindest teilweise umfangen ist, und die Trägereinheit zumindest teilweise aus Kunststoff gefertigt ist und einen geeigneten ersten Halte- und Positioniermechanismus aufweist, über welchen die Trägereinheit an dem Statorjoch und/oder Statorzahn positioniert und befestigt ist, **dadurch gekennzeichnet, dass** die Trägereinheit eine Aufnahme zur Befestigung des Flusssammelelementes, insbesondere eines Flusssammelplättchens, an der Trägereinheit aufweist, so dass bei an der Trägereinheit befestigtem Flussammelelement, das Flusssammelelement über die Trägereinheit mit dem Statorjoch und/oder Statorzahn verbunden ist.

2. Stator einer Axialflussmaschine nach Anspruch 1, **dadurch gekennzeichnet, dass** die Trägereinheit einen Verriegelungsmechanismus zur Befestigung des Flusssammelelementes an der Trägereinheit aufweist, der einerseits ermöglicht, dass bei unbewickelter Trägereinheit und geöffnetem Verriegelungsmechanismus das Flusssammelelement an der Trägereinheit angeordnet werden kann, insbesondere in die Trägereinheit einlegbar und/oder einschiebbar ist, und andererseits durch das Aufwickeln der Spulenwicklung an der Spulenwandung der Trägereinheit der Verriegelungsmechanismus geschlossen wird, so dass das Flusssammelelement verliersicher, insbesondere formschlüssig, an der Trägereinheit befestigt ist.

3. Stator einer Axialflussmaschine nach einem der vorhergehenden Ansprüche, **dadurch gekennzeichnet, dass** der erste Halte- und Positioniermechanismus so ausgestaltet ist, dass die Trägereinheit über eine formschlüssige Verbindung am Statorjoch befestigt ist.

4. Stator einer Axialflussmaschine nach einem der vorhergehenden Ansprüche, **dadurch gekennzeichnet, dass** der erste Halte- und Positioniermechanismus ein Spannelement, insbesondere eine metallische Federklammer, zur Fixierung der Trägereinheit am Stator aufweist, wobei das Spannelement zumindest teilweise an der den Statorzähnen abgewandten Seite des Statorjochs angeordnet ist.

5. Stator einer Axialflussmaschine nach Anspruch 4, **dadurch gekennzeichnet, dass** das Spannelement an zumindest zwei unterschiedlichen Ankerpunkten mit der Trägereinheit verbunden ist, wobei ein erster Ankerpunkt im Bereich des äußeren Durchmessers des Statorsjoches abgeordnet ist und ein zweiter Ankerpunkt im Bereich des inneren Durchmessers des Statorjoches angeordnet ist.

6. Stator einer Axialflussmaschine nach Anspruch 4 oder 5, **dadurch gekennzeichnet, dass** das Spannelement die Trägereinheit in Richtung des Statorjochs spannt und damit das Flusssammelelement gegen das, dem Statorjoch abgewandten Ende des Statorzahns, drückt und zwischen dem Statorzahn und dem Flusssammelelement eine Pressung herstellt.

7. Stator einer Axialflussmaschine nach Anspruch 6, **dadurch gekennzeichnet, dass** die Trägereinheit, in Richtung der durch das Spannelement ausgeübten Vorspannung der Trägereinheit gegen das Statorjoch, zum Statorjoch hin eine Freistellung aufweist, so dass das Flusssammelelement durch das Spannelement über die Trägereinheit auf Kontakt gegen den Statorzahn gepresst werden kann.

8. Stator einer Axialflussmaschine nach einem der vorhergehenden Ansprüche, **dadurch gekennzeichnet, dass** das Flusssammelelement zumindest teilweise SMC-Material aufweist.

9. Stator einer Axialflussmaschine nach einem der vorhergehenden Ansprüche, **dadurch gekennzeichnet, dass** die Trägereinheit zumindest teilweise aus faserverstärktem Kunststoff besteht.

10. Stator einer Axialflussmaschine nach einem der vorhergehenden Ansprüche, **dadurch gekennzeichnet, dass** die Trägereinheit zumindest teilweise aus einem spritzgegossenen Kunststoff besteht.

11. Stator einer Axialflussmaschine nach einem der vorhergehenden Ansprüche, **dadurch gekennzeichnet, dass** die Trägereinheit über eine formschlüssige Verbindung mit dem Statorjoch verbunden ist.

12. Stator einer Axialflussmaschine nach einem der vorhergehenden Ansprüche, **dadurch gekennzeichnet, dass** die Trägereinheit integrierte Kontaktterminals zur Kontaktierung der Spulenwicklungen aufweist.

13. Stator einer Axialflussmaschine nach einem der vorhergehenden Ansprüche, **dadurch gekennzeichnet, dass** die Trägereinheit integrierte Verschaltungsterminale zur Verschaltung der Spulenwicklungen aufweist.
